# EUROPEAN PATENT SPECIFICATION

(11) **EP 3 513 286 B1**
(45) Date of publication and mention of the grant of the patent: **04.12.2024**
(21) Application number: 17768400.8
(22) Date of filing: 07.09.2017
(51) Int. Cl.: G06F 9/445, G06F 9/50

(54) **STATICALLY DETERMINING A PROGRAM MEMORY REQUIREMENTS**
STATISCHES BESTIMMEN EINER PROGRAMM-SPEICHERANFORDERUNGEN
DETERMINER STATIQUEMENT LES BESOINS EN MEMOIRE D´UN PROGRAMME

(30) Priority: 16.09.2016 GB 201615807
(43) Date of publication of application: 24.07.2019
(73) Proprietor: Siemens Mobility Limited, London, NW1 2PL (GB)
(72) Inventor: KYD, Graham, Staverton Trowbridge BA14 8UY (GB); PLENTY, Richard, Coalpit Heath Bristol BS36 2PL (GB)
(74) Representative: Siemens Patent Attorneys
(86) International application number: PCT/EP2017/072430
(87) International publication number: WO 2018/050528

(56) References cited:
- EP-A2- 0 456 275
- EP-A2- 0 456 275
- WO-A2-03/029982
- WO-A2-03/029982
- US-A1- 2006 036 798
- US-A1- 2006 036 798
- US-A1- 2007 294 691
- US-A1- 2007 294 691
- US-A1- 2012 324 197
- US-A1- 2012 324 197
- RAMAKRISHNA RAO D T V: "Efficient stack sizing for very large software systems", COMPUTING&INFORMATICS, 2006. ICOCI '06. INTERNATIONAL CONFERENCE ON, IEEE, PISCATAWAY, NJ, USA, 6 June 2006 (2006-06-06), pages 1 - 10, XP031539362, ISBN: 978-1-4244-0219-9
- RAMAKRISHNA RAO D T V: "Efficient stack sizing for very large software systems", COMPUTING&INFORMATICS, 2006. ICOCI '06. INTERNATIONAL CONFERENCE ON, IEEE, PISCATAWAY, NJ, USA, 6 June 2006 (2006-06-06), pages 1 - 10, XP031539362, ISBN: 978-1-4244-0219-9

## Description

The invention relates to a method for operating a computer, a method of operating a railway network and a computer program product.

In general, a computer program can process a maximum number of possible parameters. This maximum number of possible parameters has to be high enough for any application of the computer program in the future.

In standard applications, a maximum amount of memory space on a storage device of the computer is necessary for executing the program with the maximum number of configurable parameters.

To enable high maximum numbers of possible/configurable parameters within one application, the memory size of memory devices has increased over the years continuously. Moreover, the memory size of the memory devices has increased over the years continuously to enable executing several applications simultaneously, which all have high maximum numbers of possible/configurable parameters. But the increasing of memory size of memory devices is limited. For example, static memory allocation may be used to allocate memory for computer programs before compilation, as in US2006/036798 A1

This problem is solved nowadays for quite a lot of applications by using dynamic memory allocation. By means of dynamic memory allocation, the necessary memory space can be allocated, while the computer program is executed. However, for safety relevant and/or security relevant computer programs, the dynamic memory allocation is not allowed for safety reasons.

One objective of the invention is to provide an enhanced method for reducing the amount of necessary memory space, which eliminates the disadvantages of the prior art.

This objective is accomplished by means of a method according to claim 1.

The invention is based on the idea, that the necessary amount of memory space can be determined before executing the compiled computer program. Hence, the necessary amount of memory space can be allocated statically before executing the computer program. In this way, the allocation of memory space may be specific to the number of input parameters to be processed. Particularly, the allocated memory space may not be changed during the execution of the compiled computer program with this method. Therefore, expediently the invention is suitable for safety relevant and/or security relevant computer programs.

Advantageously, the compiled computer program is available in form of an executable file. Further, the computer program may be available in form of a generic binary file. Moreover, the computer program may be available in form of a machine readable code and/or in form of a bytecode.

It is preferred that the determined minimum amount of memory space, in the following also called minimum amount of memory space, is needed to support the number of input parameters to be processed by the computer program. Hence, a minimum amount of memory space, that is necessary for executing the computer program with the parameters to be processed, in the meaning of the invention, may be a minimum amount of memory space, which is needed to support the number of input parameters to be processed by the computer program.

The allocated memory space may be continuous and/or fragmented. Moreover, the allocated memory space may be volatile and/or non-volatile. Thus, the storage device may be a volatile and/or non-volatile storage device. Further, the storage device may be a working memory device. Moreover, the storage device may be a combination of several storage devices of the computer.

Preferentially, the number of parameters to be processed by the compiled computer program is set during a configuration.

The number of input parameters to be processed may be set directly during the configuration, particularly by a number. Further, the number of input parameters to be processed may be set indirectly during the configuration, for example by setting identifiers for the input parameters to be processed, particularly by setting names, addresses and/or other identifiers for the input parameters to be processed.

Particularly, the number of input parameters to be processed by the computer program may be set within a configuration file. The configuration file may be loaded during the execution of the compiled computer program, particularly during a start-up procedure of the compiled computer program.

Advantageously, for determining the number of input parameters to be processed, the configuration is read, particularly the configuration settings may be read. It is preferred that, for determining the number of input parameters to be processed, the configuration file is read. Further, for determining the minimum amount of memory space necessary for executing the program with the input parameters to be processed, the configuration may be read, particularly the configuration settings and/or the configuration file may be read.

For executing the compiled computer program, a maximum number of input parameters may be configurable. A maximum amount of memory space may be necessary for executing the compiled computer program with the maximum number of configurable parameters. It is advantageous, that the determined minimum amount of memory space is less than the maximum amount of memory space. Hence, the amount of memory space, which is allocated statically for executing the compiled computer program, may be reduced by the invention. In this way, the amount of memory space, which expediently is blocked by the execution of the compiled computer program, may be reduced by the invention.

The number of input parameters to be processed is equal to the maximum number of configurable parameters. In this case, the determined minimum amount of memory space may be equal to the maximum amount of memory space.

The computer program comprises a memory map. Advantageously, the determined minimum amount of memory space is allocated statically by adjusting the memory map of the computer program. Moreover, for the allocation of the (determined) minimum amount of memory space for executing the compiled computer program, the memory map of the computer program may be read and/or adjusted.

A memory map in the meaning of the invention is a description that informs what areas of memory a compiler has allocated to items used within the compiled computer program. Advantageously, the programmer initially sets up the memory map. During the set-up of the memory map, the compiler may be directed where to store different items. The items may be configurable input parameters as well as preconfigured items. Then the compiler may generate the memory map. Before the adjustment (of the memory map), preferentially the memory map comprises storage locations of all configurable input parameters.

Expediently, the memory map is adjusted according to the configuration settings. Particularly, the memory map may be given, e.g. by the programmer, and then adjusted according to the configuration settings. By means of the adjustment, the memory map may be updated.

The memory map is adjusted as it is reduced by the storage locations of the unnecessary input parameters. Accordingly, not only the number of input parameters to be processed may be determined, but also unnecessary input parameters may be identified.

Particularly, the adjusted memory map may comprise the storage locations of the compiled computer program itself. Moreover, the adjusted memory map may comprise the storage locations of the input parameters to be processed. The adjusted memory map may comprise the storage location of any data as it comprises addresses, where the respective data is stored on the storage device.

The computer program may be a safety relevant and/or a security relevant computer program.

The invention and/or the described embodiments thereof may be realised - at least partially or completely - in software and/or in hardware, latter e. g. by means of a special electrical circuit.

Further, the invention and/or the described embodiments thereof may be realised - at least partially or completely - by means of a computer readable medium having a software, which software executes the invention and/or the embodiments thereof.

According to the invention, it is checked, if the determined minimum amount of memory space is available on the storage device of the computer. The check may be done by the compiled computer program itself, particularly during a start-up procedure of the computer program. Further, the check can be done before executing the compiled computer program, particularly by the software.

Further, if the determined minimum amount of memory space is available on the storage device of the computer, the compiled computer program is executed and/or the compiled computer program is run.

If the determined minimum amount of memory space is not available on the storage device, the compiled computer program is stopped and/or is not executed. Moreover, if the determined minimum amount of memory is not available on the storage device, an error message may be created. For example, the error message may say that not enough memory is available.

Further, it may be checked, how much memory space is available on the storage device. A possible number of input parameters may be determined on the basis of the available amount of memory space.

If the determined minimum amount of memory space is not available, the error message may say, e. g., how much memory space is missing. Moreover, the error message may show, e. g., the possible number of parameters, for which the available memory space is enough.

Advantageously, the input parameters to be processed are connection parameters of sensors and/or of signals and/or of track switches and/or of communications channels of the railway network. A connection parameter may be a name and/or an address (of the respective component). Further, the input parameters can be any other parameters of the railway network and/or of its components.

Further, the invention is related to a method for operating a railway network, using a compiled computer program (4) which is operated according to the above mentioned method. Moreover, in the method for operating a railway network, the input parameters to be processed may be parameters of the railway network. The railway network, the compiled computer program and/or the input parameters may be the same as mentioned above.

Moreover, the invention is related to a computer program product, particularly a computer readable medium, having a software for execution on a computer, which software, when executed on a computer, causes the computer to perform the method mentioned above.

Features, which are mentioned above (in connection with the method) may also refer to the computer program product.

Even if terms are used in the singular or in a specific numeral form, the scope of the invention should not be restricted to the singular or the specific numeral form.

The previously given description of advantageous embodiments of the invention contains numerous features which are partially combined with one another in the dependent claims. Expediently, these features can also be considered individually and be combined with one another into further suitable combinations. More particularly, these features may be combined with the computer program product and the method according to the respective independent claim individually as well as in any suitable combination. Furthermore, features of the method, formulated as apparatus features, may be considered as features of the computer program product and, accordingly, features of the computer program product, formulated as process features, may be considered as features of the method.

The above-described characteristics, features and advantages of the invention and the manner in which they are achieved can be understood more clearly in connection with the following description of exemplary embodiments which will be explained with reference to the drawings. The exemplary embodiments are intended to illustrate the invention, but are not supposed to restrict the scope of the invention to combinations of features given therein, neither with regard to functional features. Furthermore, suitable features of each of the exemplary embodiments can also be explicitly considered in isolation, be removed from one of the exemplary embodiments, be introduced into another of the exemplary embodiments and/or be combined with any of the appended claims.

In the drawings display:
- FIG 1: Memory allocation in an interlocking software without using the invention;
- FIG 2: memory map without using the invention;
- FIG 3: flow chart of the inventive memory allocation;
- FIG 4: another flow chart of the inventive memory allocation; and
- FIG 5: adjustment of the memory map;

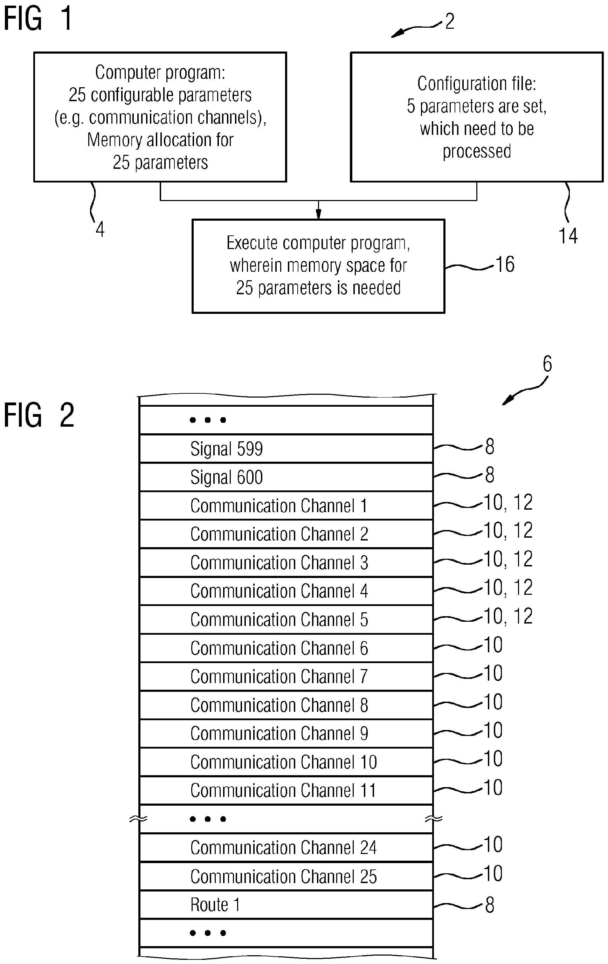

FIG 1 shows a flow chart 2. The flow chart 2 shows a memory allocation in a computer having a computer program 4 without using the invention. FIG 2 schematically shows a section of a memory map 6 according to the memory allocation shown in FIG 1. Thus, the following description regards to both, FIG 1 and FIG 2.

A computer program 4 has been programmed by a programmer. The programmer has set the memory map 6 of the computer program 4. For running/executing the computer program 4, parameters 10 are needed to be set/configured. The memory map 6 comprises the storage locations of all preconfigured items 8 as well as the storage locations of all configurable parameters 10.

In this example, the computer program 4 is an interlocking software program of a railway network. Further, in this example, the parameters 10 are connection parameters of communication channels of the railway network. Connection parameters of the communication channels may be names, addresses and/or frequencies of the communication channels. Hence, the computer having the interlocking software program can be connected with a configurable number of communication channels. Particularly, the computer having the interlocking software program can be connected over a configurable number of communication channels with an equal number of other computers having other interlocking software programs.

During a configuration, a maximum number of parameters 10 is configurable. In this example, twenty-five parameters 10 are configurable. Further, during the configuration it is set how many parameters 12 are needed to be processed. The number of parameters to be processed 12 is less than the maximum number of configurable parameters 10. The number of parameters to be processed 12 by the computer program 4 is set/configured within a configuration file 14. In this example, five parameters 12 are needed to be processed. The configuration file 14 is loaded during the execution 16 of the computer program 4, particularly during a start-up procedure of the computer program 4. In this way, the parameters to be processed 12 are passed to the computer program 4, particularly indirectly, by means of the configuration file 14.

For the allocation of memory space for executing 16 the computer program 4, the memory map 6 is used. The amount of memory space for executing 16 the computer program 4, which is allocated, depends on the number of configurable parameters 10.

In particular, the amount of allocated memory space is the maximum memory space, which is necessary for executing 16 the computer program 4 with the maximum number of configurable parameters 10 (here twenty-five).

Hence, memory space for twenty-five (configurable) parameters 10 is blocked within this example, even if only five parameters 12 are needed to be processed. Hence, memory space for twenty (unnecessary) parameters is not used - and, thus, wasted.

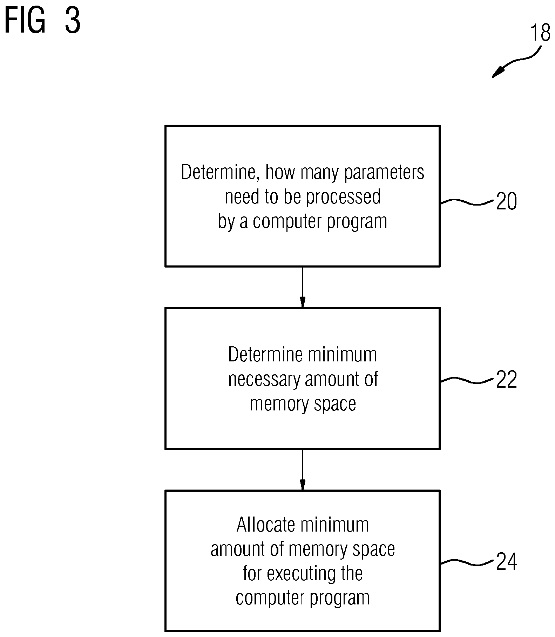

FIG 3 shows another flow chart 18. The flow chart describes the method for operating a computer according to the invention. Essentially identical elements to FIG 1 and 2 are generally denoted by the same reference numbers.

Before executing a compiled computer program 4 on the computer, the following steps are done, by means of a software of the computer or of another computer:
It is determined 20, how many input parameters 12 are needed to be processed by the computer program 4. Thus, the first step is the determination 20 of the needed number of input parameters to be processed 12. Further, a minimum amount of memory space on a storage device of the computer is determined 22, that is necessary for executing the compiled computer program with the parameters to be processed 12. Hence, the second step is the determination 22 of the minimum (necessary) amount of memory space. Moreover, the determined 22 minimum amount of memory space is allocated 24 statically for executing the computer program. Thus, the third step is the allocation 24 of the (determined 22) minimum amount of memory space.

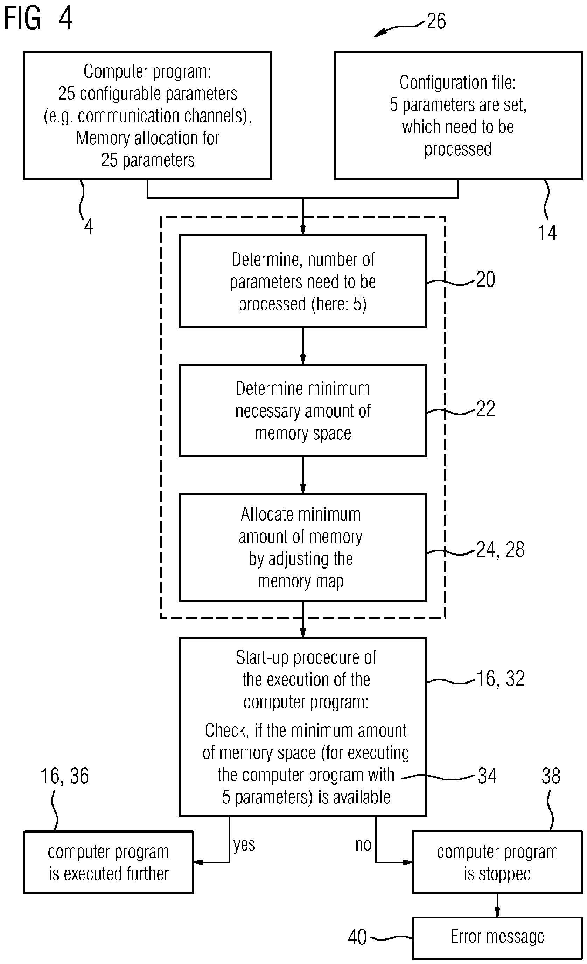

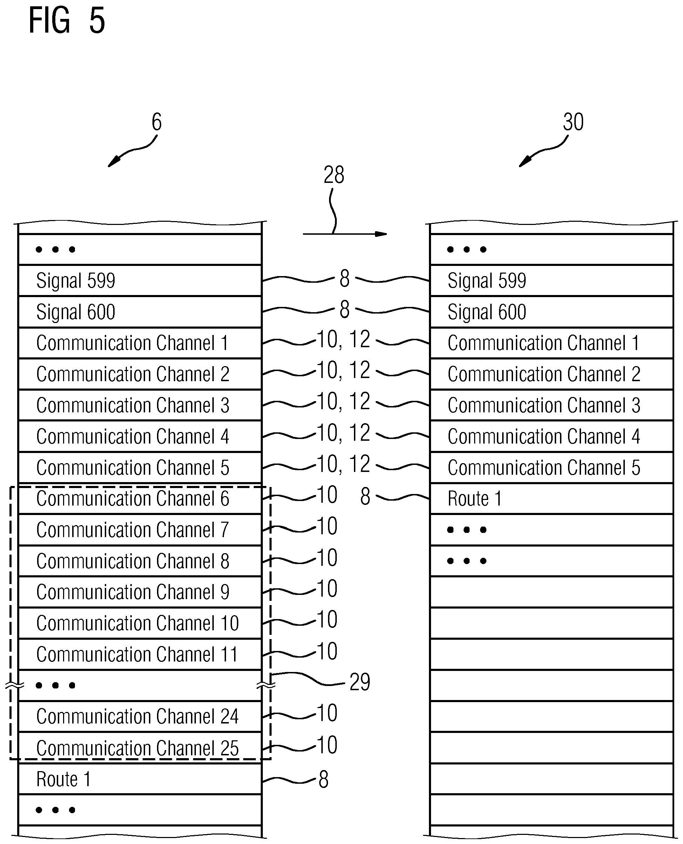

The method for operating the computer may comprise further steps. Further possible steps are, for instance, described in FIG 4 and FIG 5.

FIG 4 shows another flow chart 26 describing the method for operating a computer according to the invention. FIG 5 schematically shows an adjustment of the memory map 6 according the memory allocation as shown in FIG 4. Thus, the following description regards to both, FIG 4 and FIG 5.

Further, the following description refers to the example of FIG 1 and FIG 2 as well as to the embodiment of FIG 3. Essentially identical elements are generally denoted by the same reference numbers and not mentioned features are included in the following embodiment without being described again.

A compiled computer program 4 has been produced by a programmer. The programmer sets the memory map 6 of the computer program 4 (as described in FIG 1 and 2).

In this example the compiled computer program 4 is an interlocking software program of a railway network. Further, in this example, the configurable input parameters 10 are connection parameters of communication channels of the railway network.

During a configuration, a maximum number of input parameters 10 is configurable. Further, during the configuration the number of input parameters to be processed 12 is set/configured within a configuration file 14. The number of input parameters to be processed 12 is less than the maximum number of configurable input parameters 10.

In general, a maximum number (n) of configurable input parameters 10 (X1, X2, ... Xn) can be set/configured within the configuration file 14. The number (i, with i<n or i≤n) of input parameters to be processed 12 (X1, ... Xi) is set during the configuration within the configuration file 14. Thus, in general the configuration settings are X1, ... Xi.

In this example, twenty-five input parameters 10 (here: Communication Channel 1, Communication Channel 2, ... Communication Channel 25) are configurable. In this example, five input parameters 12 (here: Communication Channel 1, ... Communication Channel 5) are need to be processed.

A software, which may be stored at the computer as well, reads the configuration file 14. The configuration file 14 comprised configuration settings, particularly the input parameters to be processed 12. The software determines 20 the number of input parameters to be processed 12 from the configuration file 14.

A minimum amount of memory space for executing the compiled computer program 4 with the input parameters to be processed 12 is determined 22, by means of the software. Then, the determined minimum amount of memory space is allocated 24 statically for executing the computer program 4, by means of the software.

The determined minimum amount of memory space is allocated 24 statically by adjusting 28 a memory map 6 of the computer program 4 (see especially FIG 5).

The memory map 6 is adjusted 28 according to the configuration settings of the configuration file 14, particularly according to the set input parameters to be processed 12. By means of the adjustment, the memory map 6 is reduced by the storage locations of the unnecessary input parameters 29. Unnecessary input parameters 29 are any configurable input parameters 10, which are not needed to be processed. In this example, unnecessary input parameters 29 are Communication Channel 6 up to Communication Channel 25. In FIG 5, the unnecessary input parameters 29 of the memory map 6 are framed by a dashed line.

Accordingly, not only the number of input parameters to be processed 12 is determined 20, but also unnecessary input parameters 29 are identified by means of the software.

By means of the adjustment 28, the memory map 6 is updated by an adjusted memory map 30. The adjusted memory map 30 comprises the storage locations of the computer program itself and/or of preconfigured items 8. Moreover, the adjusted memory map 30 comprises the storage locations of the input parameters to be processed 12. However, the adjusted memory map 30 does not comprise the storage locations of unnecessary input parameters 29. In contrast, the storage locations of unnecessary input parameters 29 are removed from the adjusted memory map 30. Hence, memory space is freed by means of the adjustment 28 and/or by means of the allocation 24.

In this example, the (determined 22) minimum amount of memory space is less than the maximum amount of memory space, which would be necessary for executing 16 the compiled computer program 4 with the maximum number of configurable input parameters 10. In this way, the software reduces the amount of memory space to the minimum amount of memory space, which is necessary for executing 16 the compiled computer program 4 with the needed number of input parameters to be processed 12. Hence, the amount of memory space, which is allocated 24 to the compiled computer program, is reduced by the invention.

The steps executed by the software are framed by a dashed line in FIG 4.

The configuration file 14 is loaded during the execution of the compiled computer program 4, particularly during a start-up procedure 32 of the computer program 4.

Within the start-up procedure 32 of the compiled computer program 4 it is checked 34, if the determined minimum amount of memory space is available on the storage device of the computer. In this example, it is checked 34, if the memory space for executing 16 the compiled computer program 4 with five parameters to be processed 12 is available. The check 34 is done by the computer program 4 itself.

If the determined amount of memory space is available on the storage device of the computer, the compiled computer program 4 is executed further/completely 36.

If the determined amount of memory space is not available on the storage device of the computer, the compiled computer program is stopped 38 and an error message 40 will occur. to the compiled computer program, is reduced by the invention.

The steps executed by the software are framed by a dashed line in FIG 4.

The configuration file 14 is loaded during the execution of the compiled computer program 4, particularly during a start-up procedure 32 of the computer program 4.

Within the start-up procedure 32 of the compiled computer program 4 it is checked 34, if the determined minimum amount of memory space is available on the storage device of the computer. In this example, it is checked 34, if the memory space for executing 16 the compiled computer program 4 with five parameters to be processed 12 is available. The check 34 is done by the computer program 4 itself.

If the determined amount of memory space is available on the storage device of the computer, the compiled computer program 4 is executed further/completely 36.

If the determined amount of memory space is not available on the storage device of the computer, the compiled computer program is stopped 38 and an error message 40 will occur.

While specific embodiments have been described in detail, those with ordinary skill in the art will appreciate that various modifications and alternative to those details could be developed in light of the overall teachings of the disclosure. For example, elements described in association with different embodiments may be combined. Accordingly, the particular arrangements disclosed are meant to be illustrative only and should not be construed as limiting the scope of the claims or disclosure, which are to be given the full breadth of the appended claims, and any equivalents thereof.

## Claims

1. Method for operating a computer,
wherein, before executing (16) a computer program (4) on the computer,
- a programmer produces the computer program using a maximum number of configurable input parameters (10) and sets a memory map (6) of the computer program, where the memory map is a description that informs what areas of memory a compiler is directed to use to store input parameters (10) used within the compiled computer program;
- a number of input parameters (12) of the configurable input parameters (10) are configured to be processed, wherein the number of input parameters to be processed (12) is less than the maximum number of configurable input parameters (10);
the following steps are done by means of a software of the computer
- it is determined (20), how many input parameters (12) are needed to be processed by the computer program (4),
- a minimum amount of memory space of the computer is determined (22), that is necessary on the storage device of the computer for executing (16) the computer program (4) with the input parameters to be processed (12),
- the determined (22) minimum amount of memory space is allocated (24) statically for executing (16) the computer program (4);
- wherein
- the computer program is a compiled computer program and the compiled computer program (4) is an interlocking software program for controlling a railway network;
- it is checked (34), if the minimum amount of memory space is available on the storage device of the computer;
- if the minimum amount of memory space is available on the storage device of the computer, the compiled computer program (4) is executed (36)
- if the minimum amount of memory space is not available on the storage device of the computer, the compiled computer program (4) is not executed and/or the compiled computer program (4) is stopped (38);
- the minimum amount of memory space is allocated (24) statically by adjusting (28) a memory map (6) of the computer program (4) and the memory map (6) is adjusted (28) as the memory map (6) is reduced by storage locations of unnecessary parameters (29), where unnecessary input parameters (29) are any configurable input parameters (10) which are not needed to be processed.

2. Method according to claim 1,
**characterised in that** the number of input parameters to be processed (12) by the compiled computer program (4) is set during a configuration.

3. Method according to any of the preceding claims, **characterised in that** the number of input parameters to be processed (12) by the compiled computer program (4) is set within a configuration file (14).

4. Method according to claim 3,
**characterised in that**, for determining (20) the number of input parameters to be processed (12), the configuration file (14) is read.

5. Method according to any of the preceding claims, **characterised in that** a maximum number of input parameters (10) is configurable for executing (16) the compiled computer program, a maximum amount of memory space is necessary for executing (16) the compiled computer program (4) with the maximum number of configurable parameters (10) and the minimum amount of memory space is less than the maximum amount of memory space.

6. Method according to claim 1,
**characterised in that** the input parameters to be processed (12) are connection parameters of sensors and/or of signals and/or of track switches and/or of communication channels of the railway network.

7. Method for operating a railway network, using a compiled computer program (4), which is operated according to any of the preceding claims and wherein the input parameters to be processed (12) are parameters of the railway network.

8. Computer program product, particularly a computer readable medium, having a software for execution on a computer, which software, when executed on a computer, causes the computer to perform the method according to any of claims 1-6

## Patentansprüche

1. Verfahren zum Betreiben eines Computers,
wobei vor dem Ausführen (16) eines Computerprogramms (4) auf dem Computer,
- ein Programmierer das Computerprogramm unter Verwendung einer maximalen Anzahl von konfigurierbaren Eingabeparametern (10) erzeugt und eine Speicherkarte (6) des Computerprogramms festlegt, wobei die Speicherkarte eine Beschreibung ist, die informiert, welche Speicherbereiche ein Compiler verwendet, um Eingabeparameter (10) zu speichern, die innerhalb des kompilierten Computerprogramms verwendet werden;
- eine Anzahl von Eingabeparametern (12) der konfigurierbaren Eingabeparameter (10) konfiguriert sind, um verarbeitet zu werden, wobei die Anzahl von Eingabeparametern, die verarbeitet werden sollen (12), geringer ist als die maximale Anzahl von konfigurierbaren Eingabeparametern (10);
die folgenden Schritte werden mittels einer Software des Computers durchgeführt
- es wird ermittelt (20), wie viele Eingabeparameter (12) von dem Computerprogramm (4) zu verarbeiten sind,
- es wird eine minimale Speicherplatzmenge des Computers ermittelt (22), der auf der Speichervorrichtung des Computers zum Ausführen (16) des Computerprogramms (4) mit den zu verarbeitenden Eingabeparametern (12) erforderlich ist,
- die ermittelte (22) minimale Speicherplatzmenge wird statisch für die Ausführung (16) des Computerprogramms (4) zugewiesen (24);
- wobei
- das Computerprogramm ein kompiliertes Computerprogramm ist und das kompilierte Computerprogramm (4) ein formschlüssiges Softwareprogramm zur Steuerung eines Eisenbahnnetzes ist;
- überprüft wird (34), ob auf der Speichervorrichtung des Computers die minimale Speicherplatzmenge zur Verfügung steht;
- steht auf der Speichervorrichtung des Computers die minimale Speicherplatzmenge zur Verfügung, wird das kompilierte Computerprogramm (4) ausgeführt (36)
- steht die minimale Speicherplatzmenge auf der Speichervorrichtung des Computers nicht zur Verfügung, wird das kompilierte Computerprogramm (4) nicht ausgeführt und/oder das kompilierte Computerprogramm (4) wird angehalten (38);
- die minimale Speicherplatzmenge durch Einstellen (28) einer Speicherkarte (6) des Computerprogramms (4) statisch zugewiesen (24) wird und die Speicherkarte (6) eingestellt (28) wird, wenn die Speicherkarte (6) durch Speicherplätze von unnötigen Parametern (29) reduziert wird, wobei unnötige Eingabeparameter (29) konfigurierbare Eingabeparameter (10) sind, die nicht verarbeitet werden müssen.

2. Verfahren nach Anspruch 1,
**dadurch gekennzeichnet, dass** die Anzahl der durch das kompilierte Computerprogramm (4) zu verarbeitenden Eingabeparameter (12) während einer Konfiguration eingestellt wird.

3. Verfahren nach einem der vorhergehenden Ansprüche,
**dadurch gekennzeichnet, dass** die Anzahl der von dem kompilierten Computerprogramm (4) zu verarbeitenden Eingabeparameter (12) in einer Konfigurationsdatei (14) festgelegt wird.

4. Verfahren nach Anspruch 3,
**dadurch gekennzeichnet, dass** zum Ermitteln (20) der Anzahl der zu verarbeitenden Eingabeparameter (12) die Konfigurationsdatei (14) gelesen wird.

5. Verfahren nach einem der vorhergehenden Ansprüche,
**dadurch gekennzeichnet, dass** eine maximale Anzahl von Eingabeparametern (10) für die Ausführung (16) des kompilierten Computerprogramms konfigurierbar ist, eine maximale Speicherplatzmenge für die Ausführung (16) des kompilierten Computerprogramms (4) mit der maximalen Anzahl von konfigurierbaren Parametern (10) erforderlich ist und die minimale Speicherplatzmenge geringer ist als die maximale Speicherplatzmenge.

6. Verfahren nach Anspruch 1,
**dadurch gekennzeichnet, dass** die zu verarbeitenden Eingabeparameter (12) Anschlussparameter von Sensoren und/oder von Signalen und/oder von Weichen und/oder von Kommunikationskanälen des Eisenbahnnetzes sind.

7. Verfahren zum Betreiben eines Eisenbahnnetzes,
unter Verwendung eines kompilierten Computerprogramms (4), das nach einem der vorhergehenden Ansprüche betrieben wird und bei dem die zu verarbeitenden Eingabeparameter (12) Parameter des Eisenbahnnetzes sind.

8. Computerprogrammprodukt, insbesondere ein computerlesbares Medium, mit einer Software zur Ausführung auf einem Computer, wobei die Software, wenn sie auf einem Computer ausgeführt wird, den Computer veranlasst, das Verfahren nach einem der Ansprüche 1 bis 6 durchzuführen.

## Revendications

1. Procédé de fonctionnement d'un ordinateur,
dans lequel, avant d'exécuter (16) un programme informatique (4) sur l'ordinateur,
- un programmeur produit le programme informatique en utilisant un nombre maximal de paramètres d'entrée configurables (10) et définit une carte mémoire (6) du programme informatique, où la carte mémoire est une description qui informe quelles zones de mémoire un compilateur est amené à utiliser pour stocker des paramètres d'entrée (10) utilisés dans le programme informatique compilé ;
- un certain nombre de paramètres d'entrée (12) des paramètres d'entrée configurables (10) sont configurés pour être traités, dans lequel le nombre de paramètres d'entrée à traiter (12) est inférieur au nombre maximal de paramètres d'entrée configurables (10) ;
les étapes suivantes sont effectuées au moyen d'un logiciel de l'ordinateur
- il est déterminé (20) combien de paramètres d'entrée (12) doivent être traités par le programme informatique (4),
- une quantité minimale d'espace mémoire de l'ordinateur, nécessaire sur le dispositif de stockage de l'ordinateur pour exécuter (16) le programme informatique (4) avec les paramètres d'entrée à traiter (12), est déterminée (22),
- la quantité minimale déterminée (22) d'espace mémoire est allouée (24) de manière statique pour l'exécution (16) du programme informatique (4) ;
- dans lequel
- le programme informatique est un programme informatique compilé et le programme informatique compilé (4) est un programme logiciel d'enclenchement pour contrôler un réseau ferroviaire ;
- il est vérifié (34), si la quantité minimale d'espace mémoire est disponible sur le périphérique de stockage de l'ordinateur ;
- si la quantité minimale d'espace mémoire est disponible sur le périphérique de stockage de l'ordinateur, le programme informatique compilé (4) est exécuté (36)
- si la quantité minimale d'espace mémoire n'est pas disponible sur le périphérique de stockage de l'ordinateur, le programme informatique compilé (4) n'est pas exécuté et/ou le programme informatique compilé (4) est arrêté (38) ;
- la quantité minimale d'espace mémoire est allouée (24) de manière statique par ajustement (28) d'une carte mémoire (6) du programme informatique (4) et la carte mémoire (6) est ajustée (28) au fur et à mesure que la carte mémoire (6) est réduite par des emplacements de stockage de paramètres inutiles (29), où les paramètres d'entrée inutiles (29) sont des paramètres d'entrée configurables (10) qui ne doivent pas être traités.

2. Procédé selon la revendication 1,
**caractérisé en ce que** le nombre de paramètres d'entrée à traiter (12) par le programme informatique compilé (4) est fixé lors d'une configuration.

3. Procédé selon l'une quelconque des revendications précédentes,
**caractérisé en ce que** le nombre de paramètres d'entrée à traiter (12) par le programme informatique compilé (4) est fixé dans un fichier de configuration (14).

4. Procédé selon la revendication 3,
**caractérisé en ce que**, pour déterminer (20) le nombre de paramètres d'entrée à traiter (12), le fichier de configuration (14) est lu.

5. Procédé selon l'une quelconque des revendications précédentes,
**caractérisé en ce qu'**un nombre maximal de paramètres d'entrée (10) est configurable pour exécuter (16) le programme informatique compilé, une quantité maximale d'espace mémoire est nécessaire pour exécuter (16) le programme informatique compilé (4) avec le nombre maximal de paramètres configurables (10) et la quantité minimale d'espace mémoire est inférieure à la quantité maximale d'espace mémoire.

6. Procédé selon la revendication 1,
**caractérisé en ce que** les paramètres d'entrée à traiter (12) sont des paramètres de connexion de capteurs et/ou de signaux et/ou d'aiguillages et/ou de canaux de communication du réseau ferroviaire.

7. Procédé de fonctionnement d'un réseau ferroviaire,
en utilisant un programme informatique compilé (4), qui est exploité selon l'une quelconque des revendications précédentes et dans lequel les paramètres d'entrée à traiter (12) sont des paramètres du réseau ferroviaire.

8. Produit de programme informatique, en particulier un support lisible par ordinateur, comportant un logiciel destiné à être exécuté sur un ordinateur, lequel logiciel, lorsqu'il est exécuté sur un ordinateur, amène l'ordinateur à exécuter le procédé selon l'une quelconque des revendications 1 à 6.
